# EUROPÄISCHE PATENTSCHRIFT

(11) **EP 4 033 191 B1**
(45) Veröffentlichungstag und Bekanntmachung des Hinweises auf die Patenterteilung: **21.12.2022**
(21) Anmeldenummer: 21153117.3
(22) Anmeldetag: 22.01.2021
(51) Int. Cl.: F28D 20/00

(54) **WÄRMESPEICHER MIT SCHIENEN ALS WÄRMESPEICHERKÖRPER**
HEAT ACCUMULATOR WITH RAILS AS HEAT STORAGE BODIES
ACCUMULATEUR DE CHALEUR POURVU DE RAILS EN TANT QUE CORPS D'ACCUMULATEUR DE CHALEUR

(43) Veröffentlichungstag der Anmeldung: 27.07.2022
(73) Patentinhaber: Lumenion GmbH, 10829 Berlin (DE)
(72) Erfinder: KORDT, Peter, 10829 Berlin (DE); PIEREDER, Herbert, 10829 Berlin (DE)
(74) Vertreter: Ridderbusch, Oliver

(56) Entgegenhaltungen:
- EP-A1- 3 647 677
- DE-A1- 4 236 761
- DE-A1-102011 118 106
- DE-B- 1 005 673
- KR-B1- 101 775 771

## Beschreibung

### TECHNISCHES GEBIET

Die vorliegende Offenbarung bezieht sich auf einen Wärmespeicher und ein Verfahren zum Betreiben eines Wärmespeichers.

### HINTERGRUND

Im Zuge einer klimafreundlichen Energieversorgung mit reduzierten CO₂-Emissionen kommt Wärmespeichern eine wachsende Bedeutung zu. Beispielsweise kann elektrische Energie, die zu sonnen- oder windreichen Zeiten mit Photovoltaik- bzw. Windkraftanlagen gewonnen wird, in Wärme umgewandelt und in einem Wärmespeicher als thermische Energie gespeichert werden. Zu späteren Zeiten kann die Energie entnommen werden, beispielsweise zu Heizzwecken oder zur Erzeugung elektrischer Energie mittels Turbinen-Generator-Einheiten, wie von der Anmelderin im Europäischen Patent EP 3 379 040 B1 beschrieben.

Ein gattungsgemäßer Wärmespeicher umfasst Wärmespeicherkörper zum Speichern von Wärmeenergie, ein Gehäuse, in dem die Wärmespeicherkörper aufgenommen sind, und mindestens eine Leitung für ein Wärmetransferfluid, um Wärmeenergie den Wärmespeicherkörpern zuzuführen und/oder von den Wärmespeicherkörpern wegzuführen. In entsprechender Weise wird bei einem gattungsgemäßen Verfahren zum Betreiben eines Wärmespeichers, bei dem Wärmespeicherkörper zum Speichern von Wärmeenergie in einem Gehäuse aufgenommen sind, mit einem Wärmetransferfluid Wärmeenergie den Wärmespeicherkörpern zugeführt und/oder von den Wärmespeicherkörpern weggeführt.

Allgemein sollten Wärmespeicherkörper unter anderem eine möglichst große Wärmekapazität haben, für einen hohen Wirkungsgrad auf möglichst hohe Temperaturen erhitzt werden können und für einen schnellen Wärmeaustausch eine große Kontaktfläche bieten. Zudem sollte eine hohe Anzahl an Zyklen aus Erwärmungs- und Abkühlungsphasen ohne Beschädigungen oder Verschleiß am Wärmespeicher möglich sein. Einfache Wärmespeicher, wie sie in z.B. DE 10 2011 007 335 A1 beschrieben sind, nutzen Betonblöcke als Wärmespeicherkörper. Um Schäden zu vermeiden, sollte ein solcher Wärmespeicher jedoch nur mit moderaten Temperaturen und Temperaturänderungen betrieben werden. Zudem bietet eine Blockform nur eine geringe Kontaktfläche und somit einen verhältnismäßig langsamen Wärmetransfer. Eine größere Kontaktfläche bieten Wärmespeicher, die Steine, Schüttgut oder ähnliche poröse Materialien als Wärmespeicherkörper nutzen. Hohe Temperaturen oder zahlreiche Erwärmungszyklen können jedoch zu Brüchen führen, durch welche das Schüttgut zusammensackt und kein effizienter Wärmetransfer zu z.B. einem durchströmenden Gas möglich ist.

Demgegenüber können höhere Temperaturen und somit ein höherer Wirkungsgrad bei großer Langzeitstabilität erreicht werden, wenn metallische Wärmespeicherkörper, beispielsweise aus Stahl, verwendet werden. Ein solcher gattungsgemäßer Wärmespeicher ist von der Anmelderin im Europäischen Patent EP 3 139 107 B1 beschrieben. Hierbei werden als metallische Wärmespeicherkörper mehrere Stahlplatten verwendet, die übereinandergeschichtet werden und zwischen denen Wärmetauscherrohre angeordnet werden. Wird der Wärmespeicher über einen großen Temperaturbereich betrieben, können jedoch thermische Ausdehnungen zu Schwierigkeiten führen, insbesondere wenn Wärmetauscherrohre, die eine andere Temperatur als die Stahlplatten haben, in direktem Kontakt mit den Stahlplatten stehen. In einem anderen Konzept wurden von der Anmelderin insbesondere Metallstäbe als Wärmespeicherkörper beschrieben, wie in WO 2019/025182 A1, EP 3 633 303 A1 und EP 3 647 677 A1 veröffentlicht. Die Metallstäbe können vertikal angeordnet sein oder beabstandet voneinander horizontal über geeignete Stützen gehalten sein. Während die oben genannten allgemeinen Ziele hiermit bereits weitgehend erreicht werden, wäre es weiter wünschenswert, eine möglichst große Speicherkapazität sowie schnelle Auf- und Entlademöglichkeiten mit einem einfachen Aufbau zu realisieren. DE 1005673 B offenbart ein Wärmespeicher gemäß dem Oberbegriff von Anspruch 1 und beschreibt einen Wärmetauscher, bei welchem als Wärmespeicherkörper haarnadelförmig gebogene Eisenstäbe in einen Kanal eingehängt werden. Der Kanal wird abwechselnd von wärmeabgebendem Medium und aufzuheizendem Medium durchströmt, so dass die haarnadelförmig gebogenen Eisenstäbe Wärme aufnehmen bzw. abgeben. Durch die Haarnadelform wird ein Aufhängen der Eisenstangen ermöglicht, was wiederum ein Rütteln der Eisenstäbe zur Reinigung erleichtert.

### KURZFASSUNG

Als eine **Aufgabe** der Erfindung kann angesehen werden, einen Wärmespeicher und ein Verfahren anzugeben, welche eine besonders effiziente Wärmespeicherung mit einem einfachen Aufbau ermöglichen.

Diese Aufgabe wird durch den Wärmespeicher mit den Merkmalen des Anspruchs 1 und durch das Verfahren mit den Merkmalen des Anspruchs 12 gelöst.

Bei dem Wärmespeicher der oben genannten Art umfasst erfindungsgemäß jeder der Wärmespeicherkörper eine metallische Schiene mit länglicher Form, deren Querschnitt einen Steg zwischen verbreiteten Enden aufweist.

Ebenso weist bei dem Verfahren der oben genannten Art erfindungsgemäß jeder der Wärmespeicherkörper eine metallische Schiene mit länglicher Form auf, deren Querschnitt einen Steg zwischen verbreiteten Enden aufweist.

Indem der Steg dünner als die verbreiteten Enden ist, wird ein Freiraum mit einer verhältnismäßig großen Kontaktfläche für einen Wärmeaustausch bereitgestellt. Die mechanische Stabilität ist durch diese Querschnittsform, welche auch als Doppel-T-Form beschrieben werden kann, hoch. Auch wird ein stabiler Stand ermöglicht, insbesondere ein Stapeln ohne Gefahr eines Zusammensackens bei z.B. unpräzise angeordneten Schienen. Die verbreiteten Enden, das heißt eines oder beide der Enden, bieten eine verhältnismäßig hohe Masse und somit eine große Wärmekapazität. Im Vergleich zu den eingangs beschriebenen Wärmespeicherkörpern werden durch die Erfindung eine große Wärmespeicherkapazität mit großer Oberfläche bei gleichzeitig hoher Stabilität erreicht, ohne dass komplexe oder kostenintensive Gestaltungen nötig wären.

### Optionale Gestaltungen

Varianten des erfindungsgemäßen Wärmespeichers und des erfindungsgemäßen Verfahrens sind Gegenstand der abhängigen Ansprüche und werden in der folgenden Beschreibung erläutert.

### Form der Schienen

Optional kann im Querschnitt eines der verbreiteten Enden einen Standfuß mit flachem Boden bilden. Der Standfuß kann auf einem Untergrund aufstehen und bietet durch seine flache Bodenseite einen sicheren Stand. Eine Stapelung der Schienen ist sicher möglich, indem der Standfuß einer Schiene auf einer darunter befindlichen Schiene angeordnet ist.

Zusätzlich oder alternativ kann im Querschnitt eines der verbreiteten Enden einen Schienenkopf bilden. Der Schienenkopf kann abgerundet sein und sich direkt an den Steg anschließen. Eine Breite des Schienenkopfes ist größer als eine Breite des Stegs, welcher auch als taillierter Mittelbereich bezeichnet werden kann. Bildet das andere verbreitete Ende einen Standfuß, so ist die Breite des Schienenkopfes optional kleiner als eine Breite des Standfußes. Durch den Schienenkopf wird eine verhältnismäßig große Masse bereitgestellt und damit eine große Wärmespeicherkapazität. Eine Masse des Schienenkopfes kann beispielsweise mindestens 30% oder mindestens 40% einer Gesamtmasse der Schiene ausmachen. Im Querschnitt der Schiene (senkrecht zur Längsachse der Schiene) bedeutet dies, dass eine Querschnittsfläche des Schienenkopfes mindestens 30% oder mindestens 40% einer Querschnittsfläche der Schiene ausmacht. Die optionale Abrundung oder Wölbung des Schienenkopfes bezieht sich auf eine zum Steg gegenüberliegende Seite des Schienenkopfes und verhindert bei einem Aufeinanderstapeln von Schienen eine übermäßig große Kontaktfläche zur flachen Bodenseite einer benachbarten Schiene. Dadurch bietet die Gesamtanordnung aus mehreren Schienen mit gewölbten Schienenköpfen eine größere Oberfläche und somit einen schnelleren Wärmeaustausch zu einem Wärmetransferfluid.

Ein geeignetes Beispiel von Schienen sind Bahnschienen / Eisenbahnschienen, wie sie für Züge oder andere Schienenfahrzeuge hergestellt werden. Bahnschienen vereinen die vorgenannten Formvorteile und bestehen typischerweise aus einem geeigneten Stahl bzw. einer Stahllegierung, welche einen Wärmespeicherbetrieb bei hohen Temperaturen von beispielsweise über 600°C erlaubt, ohne dass hiermit eine schnelle Materialermüdung einherginge.

### Anordnung der Schienen

Zumindest einige der Schienen können nebeneinander angeordnet sein, wobei keine starre mechanische Verbindung zwischen den Schienen nötig ist. Thermische Ausdehnungen der Schienen führen somit zu keinen Brüchen oder übermäßigen Spannungen, weil die Schienen relativ zueinander thermisch expandieren oder kontrahieren können, wenn es zu Temperaturgradienten innerhalb des Wärmespeichers kommt.

Insbesondere können die Schienen in dem Gehäuse in mehreren Ebenen oder Schichten aufeinander gestapelt sein. Hierbei können die Schienen einer Schicht direkt auf den Schienen einer darunter befindlichen Schicht aufliegen. Die Schienen, die zur selben Schicht gehören, können im Wesentlichen parallel zueinander angeordnet sein. Außer exakt parallel zueinander angeordneten Schienen können hierunter auch Winkel zwischen den Längsachsen der Schienen bis 10° oder bis 15° fallen. Die Schienen einer direkt benachbarten Schicht können quer, insbesondere senkrecht, hierzu angeordnet sein, so dass eine Schiene auf mehreren darunter befindlichen Schienen aufliegt. Hierdurch wird ein sicherer Stand gewährleistet, ohne dass die Gefahr besteht, dass Schienen einer oberen Schicht unbeabsichtigt zwischen die Schienen einer darunter befindlichen Schicht fallen.

Es können alle Schienen auf ihrem jeweilen Standfuß stehen. In der untersten Schicht an Schienen stehen die Standfüße somit auf einem Untergrund auf, während die Standfüße der übrigen Schichten jeweils auf darunter befindlichen Schienen aufliegen. Alternativ können aber auch manche Schienen gedreht angeordnet sein, so dass ihr Standfuß zur Seite oder nach oben zeigt und gegebenenfalls ihr Schienenkopf nach unten steht. Insbesondere können benachbarte Schienen alternierend auf ihrem Standfuß oder ihrem Schienenkopf stehen, das heißt innerhalb derselben Schicht sind Schienen abwechselnd mit ihrem Standfuß oder ihrem Kopf nach unten ausgerichtet. Dadurch kann in einem Freiraum zwischen zwei Schienen, die auf ihrem jeweiligen Standfuß stehen, eine weitere Schiene aufgenommen werden, so dass auf gleichem Raum eine höhere Wärmespeicherkapazität bereitgestellt wird und gleichzeitig die Oberflächen der Schienen für ein Wärmetransferfluid zugänglich bleiben.

Die beschriebenen Varianten, in denen Schienen aufeinander gestapelt sind, können auch dahingehend abgewandelt werden, dass die Schienen nicht direkt einander berühren, sondern durch z.B. (metallische) Trennplatten oder Lochplatten beabstandet sind.

Prinzipiell können die Schienen alternativ aufrecht angeordnet sein, womit ihre Längsachsen vertikal stehen und der beschriebe Querschnitt die Standfläche der jeweiligen Schiene bildet. In dieser Ausführung werden ebenfalls die vorgenannten Vorteile erreicht, insbesondere bietet die beschriebene Form genügend Kontaktfläche für einen raschen Wärmeaustausch, bei gleichzeitig hoher mechanischer Stabilität. Werden die Schienen in direkten Kontakt aneinander gestellt, kann auf engem Raum eine große Wärmespeicherkapazität mit zudem großer Fläche zum Wärmeaustausch geboten werden. Im Vergleich zu z.B. länglichen Wärmespeicherkörpern mit kreisförmigem oder quadratischen Querschnitt wird durch die erfindungsgemäßen Formen bei gleicher Querschnittsfläche/Wärmespeicherkapazität eine größere Oberfläche bereitgestellt. Zusätzlich bleibt bei direktem Kontakt benachbarter Schienen eine Zugänglichkeit zum Großteil der Schienenoberfläche für ein Wärmetransferfluid bestehen, im Gegensatz zu z.B. Stangen mit quadratischem Querschnitt, bei denen durch einen flächigen Kontakt ein großer Anteil ihrer Oberflächen nicht mehr einem Wärmetransferfluid zugänglich ist.

### Wärmetransferfluid und Wärmequelle

Das Wärmetransferfluid kann prinzipiell ein beliebiges Gas oder Gasgemisch, ein Dampf oder eine beliebige Flüssigkeit sein, z.B. Wasser oder ein Thermoöl. Ein Gasgemisch kann insbesondere Umgebungsluft oder ein Schutzgas sein, welches beispielsweise zur Korrosionsvermeidung im Feuchtigkeits- und/oder Sauerstoffgehalt reduziert ist. In manchen Erfindungsvarianten wird das Wärmetransferfluid sowohl zum Erwärmen der Wärmespeicherkörper als auch (zu anderen Zeiten) zum Entnehmen von Wärme von den Wärmespeicherkörpern genutzt. In anderen Erfindungsvarianten wird das Wärmetransferfluid allein zum Erwärmen der Wärmespeicherkörper oder allein zum Entnehmen von Wärme von den Wärmespeicherkörpern genutzt. Bei diesen Varianten kann ein zweites Wärmetransferfluid separat vom zuvor genannten Wärmetransferfluid geführt werden, wobei eines der Wärmetransferfluide allein zum Zuführen von Wärme und das andere der Wärmetransferfluide allein zum Abführen von Wärme genutzt wird. Die beiden Wärmetransferfluide können gleiche oder voneinander verschiedene Fluide sein. Wie später näher beschrieben, kann aber auch durch Heizelemente im Gehäuse eine Wärmezufuhr erfolgen, womit ein einziges Wärmetransferfluid zur Wärmeentnahme genügt.

Das Wärmetransferfluid kann in Hohlräumen, die zwischen den Standfüßen, Köpfen und Stegen jeweils benachbarter Schienen gebildet sind, aufgenommen sein. Hierbei kann es direkt an den Schienen entlang strömen und die Schienen somit direkt berühren.

Werden zur Wärmezufuhr zu den Wärmespeicherkörpern und zur Wärmeabfuhr von den Wärmespeicherkörpern zwei separat geführte Wärmetransferfluide genutzt, so kann eines der Wärmetransferfluide in Rohrleitungen zwischen den Schienen geführt werden, während das andere der Wärmetransferfluide entweder in anderen Rohrleitungen zwischen den Schienen oder frei an den Schienen (also die Schienen direkt berührend) geführt wird. Rohrleitungen können an die Schienen angepresst oder angeschweißt sein, um einen besseren thermischen Kontakt bereitzustellen.

Die eingangs genannte Leitung für ein Wärmetransferfluid kann eine Leitung sein, die zum Gehäuse führt, wobei das Wärmetransferfluid frei das Gehäuse durchströmt. Alternativ kann die Leitung auch Rohre innerhalb des Gehäuses umfassen, so dass das Wärmetransferfluid nur durch die Rohre und nicht durch übrige Freiräume im Gehäuse strömt. Die Leitung kann als ein Leitungssystem verstanden werden, welches auch Aufgabelungen auf mehrere nebeneinander verlaufende Rohre umfassen kann. Zudem kann die Leitung einen Kreislauf bilden, in dem das Wärmetransferfluid zirkuliert, beispielsweise mit Hilfe einer oder mehrerer Pumpen. Der Kreislauf kann entweder vollständig im Gehäuse verlaufen oder teilweise innerhalb und teilweise außerhalb des Gehäuses. Mit der Leitung kann ein Wärmetauscher gekoppelt sein, welcher sich insbesondere außerhalb des Gehäuses befinden kann, um Wärme auf das Wärmetransferfluid zu übertragen und/oder von diesem zu entnehmen. Der Wärmetauscher kann z.B. einen Wärmeaustausch zu einem anderen Fluid oder Fluidkreislauf bereitstellen. Insbesondere kann Abwärme eines anderen Systems über den Wärmetauscher eingebracht werden, beispielsweise Abwärme von einem Stahl- oder Kraftwerk, die Wärme eines Abgases eines Verbrennungsvorgangs oder freiwerdende Wärme einer exothermen chemischen Reaktion.

Optional kann der Wärmespeicher auch elektrische Heizelemente umfassen, durch die elektrische Energie in Wärmeenergie umgewandelt wird, welche sodann an die Wärmespeicherkörper übertragen und dort gespeichert wird. Die Heizelemente können in einem Kreislauf des Wärmetransferfluides angeordnet sein, so dass Wärme der Heizelemente über das Wärmetransferfluid an die Schienen gegeben wird. Alternativ können die elektrischen Heizelemente auch zwischen benachbarten Schienen angeordnet sein. Geeignete Hohlräume für die Heizelemente werden zwischen den Schienen im Querschnitt durch den Steg und die beiden verdickten Enden einer Schiene sowie durch einen Umfangsabschnitt mindestens einer benachbarten Schiene gebildet. Die Heizelemente können in prinzipiell beliebiger Weise gestaltet sein, beispielsweise indem sie aufgrund ihres elektrischen Widerstands Wärme erzeugen.

### Allgemeine Eigenschaften

Als Gehäuse können prinzipiell beliebig geformte Wände aufgefasst werden, welche die Wärmespeicherkörper umgeben. Das Gehäuse kann eine thermische Isolierung umfassen, um einen Wärmeverlust von den Wärmespeicherkörpern zu einer Umgebung außerhalb des Gehäuses zu reduzieren. In manchen Ausführungsformen bildet das Gehäuse die Begrenzungen für das Wärmetransferfluid. Ist das Wärmetransferfluid gas- oder dampfförmig, so kann das Gehäuse bis auf Fluidanschlüsse gasdicht gestaltet sein. Die Fluidanschlüsse können mit der Leitung für das Wärmetransferfluid verbunden sein, um das Wärmetransferfluid durch das Gehäuse zu befördern. Prinzipiell kann das Gehäuse auch mit einer Flüssigkeit als Wärmetransferfluid gefüllt sein, wobei die Schienen in die Flüssigkeit eingetaucht sind. In anderen Ausführungsformen kommen Wände des Gehäuses nicht direkt in Kontakt mit dem Wärmetransferfluid, vielmehr umfasst die Leitung für das Wärmetransferfluid mehrere Rohre, die durch das Gehäuse an den Schienen entlang verlaufen.

Unter der länglichen Form der Schienen kann verstanden werden, dass eine Längsabmessung einer Schiene mindestens 5mal oder mindestens 10mal so groß ist wie eine Breite und/oder Höhe der Schiene, wobei die Breite und Höhe senkrecht zur Längsrichtung zu verstehen sind. Der Querschnitt steht senkrecht zur Längsrichtung. Entlang der gesamten Längsrichtung der Schiene kann ihre Querschnittsform konstant sein. Grundsätzlich kann die Schiene entlang ihrer Längsrichtung auch gekrümmt sein.

Die als zusätzliche Vorrichtungsmerkmale beschriebenen Eigenschaften der Erfindung ergeben bei bestimmungsgemäßer Verwendung auch Varianten des erfindungsgemäßen Verfahrens. In umgekehrter Weise kann der Wärmespeicher auch zum Ausführen beschriebener Verfahrensvarianten eingerichtet sein.

### KURZBESCHREIBUNG DER FIGUREN

Weitere Wirkungen und Merkmale der Erfindung werden nachstehend mit Bezug auf die beigefügten schematischen Figuren beschrieben:
- FIG. 1: ist eine schematische Darstellung eines Ausführungsbeispiels eines Wärmespeichers der Erfindung;
- FIG. 2: zeigt schematisch einen Querschnitt einer Schiene von Ausführungsbeispielen eines Wärmespeichers der Erfindung;
- FIG. 3: ist eine schematische Darstellung eines weiteren Ausführungsbeispiels eines Wärmespeichers der Erfindung; und
- FIG. 4: ist eine schematische Querschnittsansicht einer Anordnung von Schienen aus einem Ausführungsbeispiel eines Wärmespeichers der Erfindung.

### DETAILLIERTE BESCHREIBUNG VON AUSFÜHRUNGSBEISPIELEN

Verschiedene Ausführungsbeispiele werden nachstehend mit Bezug auf die Figuren beschrieben. Gleiche und gleich wirkende Bestandteile sind in der Regel mit denselben Bezugszeichen gekennzeichnet.

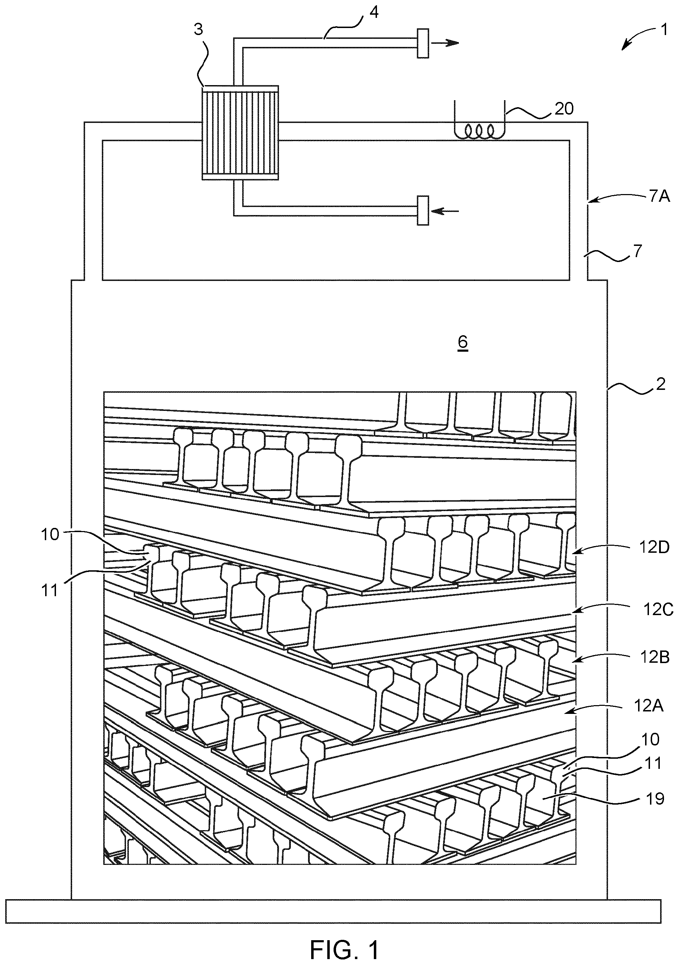

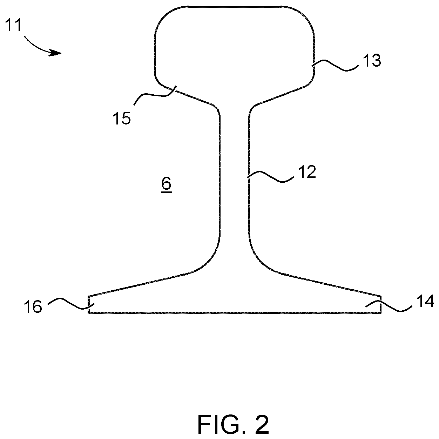

### Ausführungsbeispiel der FIG. 1 und 2

Ein Ausführungsbeispiel eines erfindungsgemäßen Wärmespeichers wird nachfolgend mit Bezug auf die FIG. 1 und 2 beschrieben. FIG. 1 zeigt schematisch einen Wärmespeicher 1 mit mehreren Schienen 11 als Wärmespeicherkörper 10. FIG. 2 zeigt einen Querschnitt einer der Schienen 11.

Der Wärmespeicher 1 umfasst ein Gehäuse 2, in dem als Wärmespeicherkörper 10 mehrere Schienen 11 aufgenommen sind. Eine Leitung 7 für Wärmetransferfluid 6 führt in das Gehäuse 2. Im dargestellten Beispiel mündet die Leitung 7 im Gehäuse 2, so dass das Wärmetransferfluid 6 frei durch das Gehäuse 2 an den Schienen 11 entlang strömen kann. Mit der Leitung 7 wird ein Kreislauf 7A für das Wärmetransferfluid 6 gebildet, so dass es beispielsweise mit Hilfe hier nicht dargestellter Pumpen an den Wärmespeicherkörpern 10 entlang zirkulieren kann.

Die Leitung 7 ist mit einem Wärmetauscher 3 thermisch gekoppelt, um Wärmeenergie zwischen dem Wärmetransferfluid 6 in der Leitung 7 und einem anderen Fluid in einer separaten Leitung 4 zu übertragen. Der Wärmetauscher 3 kann insbesondere zur Entnahme von Wärme aus dem Wärmespeicher 1 genutzt werden, so dass das Fluid in der Leitung 4 erhitzt wird und beispielsweise zur Versorgung einer Gebäude- oder Warmwasserheizung eingesetzt werden kann. Durch eine Gestaltung als Hochtemperatur-Wärmespeicher eignet sich das erhitzte Fluid in der Leitung 4 auch zur Erzeugung elektrischer Energie. Das Einbringen von Wärmeenergie kann ebenfalls mit einem Wärmetauscher erfolgen, welcher wie der dargestellte Wärmetauscher 3 mit der Leitung 7 thermisch gekoppelt wird. Im dargestellten Beispiel sind jedoch stattdessen elektrische Heizelemente 20 vorhanden, welche elektrische Energie zur Erhitzung des Wärmetransferfluides 6 nutzen.

Im Gegensatz zu herkömmlichen Wärmespeichern werden als Wärmespeicherkörper 10 mehrere Schienen 11 verwendet, bei denen es sich im dargestellten Beispiel um Eisenbahnschienen handelt. Die Schienen 11 sind in Schichten 12A-12D übereinander gestapelt. Jeweils mehrere Schienen 11 können im Wesentlichen parallel zueinander angeordnet sein und so eine sich horizontal erstreckende Schicht 12A, 12B, 12C oder 12D bilden. Die Schienen 11 direkt benachbarter Schichten, beispielsweise der Schichten 12A und 12B, sind quer zueinander angeordnet. Im dargestellten Beispiel sind die Schienen 11 verschiedener Schichten senkrecht zueinander angeordnet, wobei aber auch andere Winkel möglich sind. Eine Schiene 11 liegt somit auf mehreren, beispielsweise mindestens fünf oder mindestens zehn, darunter befindlichen Schienen 11 auf. Zwischen den Schienen 11 sind Hohlräume 19 gebildet, durch welche das Wärmetransferfluid 6 strömt. Die Hohlräume 19 bilden somit Kanäle entlang der Längsrichtung der Schienen 11.

Die Schienen 11 können entlang ihrer Länge einen einheitlichen Querschnitt aufweisen, wie er in FIG. 2 gezeigt ist. Im Querschnitt besteht eine Schiene 11 aus zwei verbreiteten Enden 13 und 14, die durch einen im Vergleich schmaleren Steg 12 miteinander verbunden sind. Die genannten Bereiche können einteilig oder zumindest aus dem gleichen Material gefertigt sein. Das verbreitete Ende 14 stellt einen Standfuß 16 dar, während das verbreitete Ende 13 einen Schienenkopf 15 bildet. Der Standfuß 16 hat eine flache Bodenseite, was einem sicheren Stand dienlich ist. Zudem ist eine Breite des Standfußes 16 bzw. seiner Bodenseite größer als eine Breite des Stegs 12 und größer als eine Breite des Schienenkopfes 15. Die Breite ist in eine Richtung senkrecht zur Längsachse der Schiene 11 und senkrecht zur Verbindungsrichtung zwischen Schienenkopf 15 und Standfuß 16 zu verstehen. Die Fläche der Bodenseite des Standfußes 16 wird somit durch dessen Breite und Länge definiert.

Der Schienenkopf 15 hat eine verhältnismäßig große Masse und ermöglicht dadurch die Speicherung großer Wärmeenergiemengen. Gleichzeitig ist eine Oberfläche und damit ein Wärmeaustausch der Schiene 11 wesentlich größer als bei z.B. einem rechteckigen Stab derselben Länge und Querschnittsfläche. Indem die Breite des Schienenkopfes 15 kleiner ist als die Breite des Standfußes 16, bleibt die Bodenseite einer auf dem Schienenkopf 15 angeordneten weiteren Schiene zugänglich. Dadurch kann besser Wärmeenergie ausgetauscht werden als in dem Fall eines symmetrischen Doppel-T-Querschnitts, welcher anstelle eines Schienenkopfes eine Form identisch zum Standfuß aufweist. Außerdem wird die Oberfläche, an welcher die Schienen 11 Wärmeenergie mit einem Wärmetransferfluid austauschen können, weiter erhöht, wenn zumindest einer obere Seite des Schienenkopfes 15 abgerundet ist, denn dadurch verkleinert sich die Berührungsfläche zu einer anliegenden Schiene.

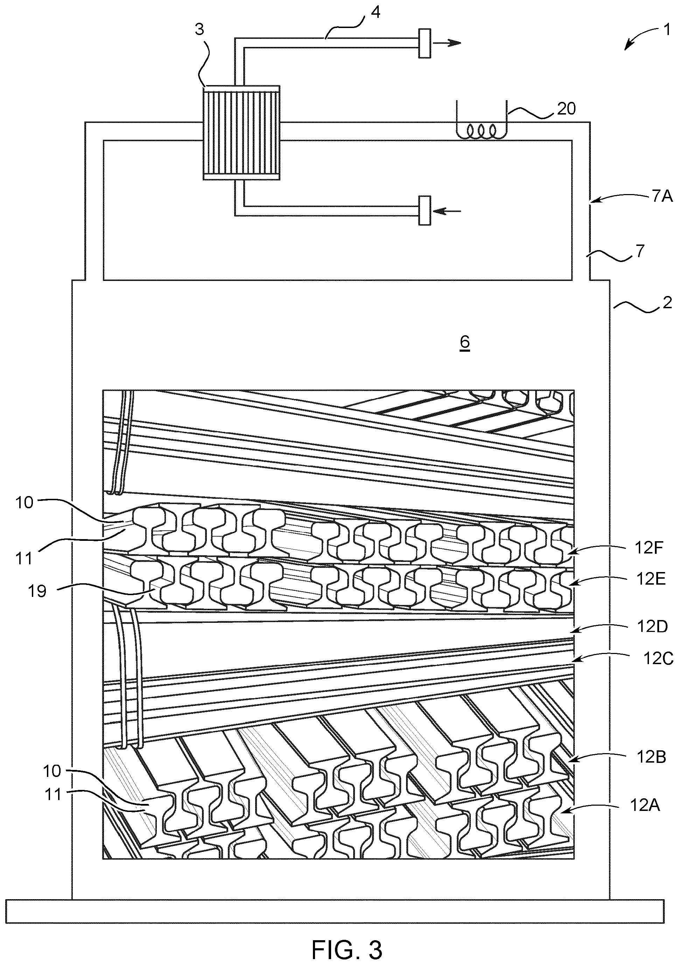

Während in FIG. 1 eine Anordnung von Schienen 11 gezeigt ist, bei welcher sich die Längsrichtungen aller Schienen 11 in einer Horizontalebene erstrecken und die Schienen 11 aufeinander gestapelt sind, werden viele der beschriebenen Wirkungen und Vorteile auch bei Abwandlungen erreicht, in denen die Schienen 11 aufrecht stehen und sich ihre Längsachsen somit in vertikaler Richtung erstrecken. Optional können die vertikal angeordneten Schienen 11 auf einer Lochplatte stehen, so dass eine durchgängige Strömung von Wärmetransferfluid entlang ihrer Längsachsen erleichtert wird. Eine weitere mögliche Anordnung von Schienen 11 wird nachfolgend mit Bezug auf FIG. 3 beschrieben.

### Ausführungsbeispiel der FIG. 3

FIG. 3 zeigt eine weitere Ausführungsvariante eines erfindungsgemäßen Wärmespeichers 1. Von dem oben beschriebenen Ausführungsbeispiel unterscheidet sich diese Variante durch die Anordnung der Schienen 11. Bei diesen handelt es sich wiederum um Bahnschienen, die mit ihrer Längsachse in horizontaler Richtung angeordnet sind. Innerhalb einer Lage (also derselben Höhe) zeigen jedoch abwechselnd der Standfuß 16 und der Schienenkopf 13 nach unten. Zwischen zwei Schienen 11, die auf ihrem Standfuß 16 stehen, ist also eine auf dem Kopf stehende Schiene 11 angeordnet. Hierdurch wird das Volumen zwischen den Schienen 11, welches prinzipiell für ein Wärmetransferfluid zur Verfügung steht, verkleinert. Gleichzeitig bleibt die zugängliche Oberfläche der Schienen 11 im Wesentlichen gleich groß wie beim Beispiel aus FIG. 1 (bei gleicher Anzahl bzw. Masse an Schienen). Je nach verwendetem Wärmetransferfluid und gewünschten Strömungseigenschaften kann die Gestaltung aus FIG. 1 oder FIG. 3 geeigneter sein.

FIG. 3 illustriert zudem, dass bei einer Stapelung von Schienen 11 nicht jede Lage oder Schicht 12A-12F quer oder senkrecht zu den benachbarten Lagen ausgerichtet sein muss. Vielmehr sind hier die Längsachsen zweier übereinander angeordneter Schienen 11 im Wesentlichen parallel, z.B. in den Schichten 12A und 12B. Die nächste hierauf angeordnete Schiene 11 (der Schicht 12C) verläuft senkrecht zu den beiden darunter befindlichen Schienen 11. FIG. 3 illustriert außerdem beispielhaft, dass optionale Befestigungen, wie Metallketten, verwendet werden können, um jeweils einige der Schienen in Position zu halten oder den Transport der Schienen beim Zusammenbau des Wärmespeichers zu erleichtern.

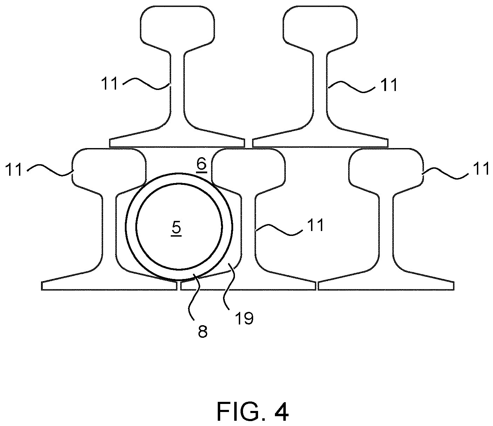

### Ausführungsbeispiel der FIG. 4

FIG. 4 zeigt eine alternative Anordnung von Schienen 11, wie sie bei den Ausführungsbeispielen der FIG. 1 oder 2 eingesetzt werden kann. In Freiräumen oder Hohlräumen 19, die zwischen benachbarten Schienen 11 gebildet sind, ist wieder ein Wärmetransferfluid aufgenommen. Zudem verläuft durch zumindest manche der Hohlräume 19 eine Rohrleitung 8, durch welche ein weiteres Wärmetransferfluid 5 geleitet wird. Eines der beiden Wärmetransferfluide 5 und 6 kann zum Einbringen von Wärme in den Wärmespeicher genutzt werden, während das andere der beiden Wärmetransferfluide 5 und 6 dem Entnehmen von Wärme aus dem Wärmespeicher dient.

Die beschriebenen Ausführungsbeispiele sind rein illustrativ und Abwandlungen hiervon sind im Rahmen der beigefügten Ansprüche möglich. Beispielsweise kann die Gestaltung der Leitung 7 für Wärmetransferfluid dahingehend verändert sein, dass sich die Leitung 7 auch durch das Gehäuse 2 erstreckt oder ausschließlich im Gehäuse 2 erstreckt und/oder dass mit der Leitung 7 kein geschlossener Kreislauf 7A gebildet wird, sondern lediglich eine Zu- und Abfuhr von Wärmetransferfluid 6 zu den Schienen 11. Allgemein soll die Beschreibung eines Elements als "mindestens ein" solches Element verstanden werden. Zum Beispiel können auch mehrere Leitungen 7 vorhanden sein, um Wärmetransferfluid teilweise getrennt oder vollständig getrennt zu verschiedenen Schienen 11 im Gehäuse 2 zu leiten. Dadurch können Schienen 11 auf unterschiedliche Temperaturen erhitzt werden oder es kann eine Auswahl erfolgen, von welchen Schienen Wärme entnommen werden soll, was unter Umständen den Wirkungsgrad der Wärmeenergieverwendung steigern kann. Zudem sind die Zeichnungen als schematische Prinzipien zu verstehen, welche um weitere Komponenten ergänzt werden können, z.B. um Pumpen, Ventilatoren, Strömungslenkbleche, Wärmeisolationen, Druckentlastungsleitungen, Temperatur- und Drucksensoren oder weitere Wärmespeicherkörper zusätzlich zu den beschriebenen Schienen.

### Bezugszeichenliste

- 1: Wärmespeicher
- 2: Gehäuse
- 3: Wärmetauscher
- 4: separate Leitung / separater Fluidkreislauf
- 5: Wärmetransferfluid
- 6: Wärmetransferfluid
- 7: Leitung für Wärmetransferfluid
- 7A: Kreislauf des Wärmetransferfluides
- 8: Rohleitung für ein Wärmetransferfluid
- 10: Wärmespeicherkörper
- 11: Schiene
- 12A-12F: Schichten an Schienen 11
- 12: Steg
- 13, 14: verbreitete Enden
- 15: Schienenkopf
- 16: Standfuß
- 19: Hohlräume zwischen den Schienen 11
- 20: elektrische Heizelemente

## Patentansprüche

1. Wärmespeicher
mit Wärmespeicherkörpern (10) zum Speichern von Wärmeenergie;
mit einem Gehäuse (2), in dem die Wärmespeicherkörper (10) aufgenommen sind; und
mit mindestens einer Leitung (7) für ein Wärmetransferfluid (6), um Wärmeenergie den Wärmespeicherkörpern (10) zuzuführen und/oder von den Wärmespeicherkörpern (10) wegzuführen,
**dadurch gekennzeichnet,**
**dass** jeder der Wärmespeicherkörper (10) eine metallische Schiene (11) mit länglicher Form umfasst, deren Querschnitt einen Steg (12) zwischen verbreiteten Enden (13, 14) aufweist.

2. Wärmespeicher nach vorstehendem Anspruch,
wobei im Querschnitt eines der verbreiteten Enden (14) einen Standfuß (16) mit flachem Boden bildet.

3. Wärmespeicher nach dem unmittelbar vorstehenden Anspruch,
wobei im Querschnitt eines der verbreiteten Enden (13) einen Schienenkopf (15) bildet, welcher sich direkt an den Steg (12) anschließt und eine Breite hat, die größer als eine Breite des Stegs (12) und kleiner als eine Breite des Standfußes (16) ist.

4. Wärmespeicher nach dem unmittelbar vorstehenden Anspruch,
wobei eine Masse des Schienenkopfes (15) mindestens 40% einer Gesamtmasse der Schiene (11) ausmacht.

5. Wärmespeicher nach einem der vorstehenden Ansprüche,
wobei die Schienen (11) durch Bahnschienen gebildet sind.

6. Wärmespeicher nach einem der vorstehenden Ansprüche,
wobei die Schienen (11) in dem Gehäuse (2) in mehreren Schichten (12A-12F) aufeinander gestapelt sind.

7. Wärmespeicher nach dem unmittelbar vorstehenden Anspruch,
wobei die Schienen (11) derselben Schicht (12B) parallel zueinander angeordnet sind und die Schienen (11) einer benachbarten Schicht (12A, 12C) quer hierzu angeordnet sind.

8. Wärmespeicher nach einem der Ansprüche 3 bis 7,
wobei alle Schienen (11) auf ihrem jeweilen Standfuß (16) stehen oder wobei benachbarte Schienen (11) alternierend auf ihrem Standfuß (16) oder ihrem Schienenkopf (15) stehen.

9. Wärmespeicher nach einem der Ansprüche 3 bis 8,
wobei das Wärmetransferfluid (6) in Hohlräumen (19), die zwischen den Standfüßen (16), Schienenköpfen (15) und Stegen (12) jeweils benachbarter Schienen (11) gebildet sind, aufgenommen ist.

10. Wärmespeicher nach einem der vorstehenden Ansprüche,
wobei zur Wärmezufuhr zu den Wärmespeicherkörpern (10) und zur Wärmeabfuhr von den Wärmespeicherkörpern (10) zwei separat geführte Wärmetransferfluide (5, 6) vorhanden sind,
wobei eines der Wärmetransferfluide (5) in Rohrleitungen (8) zwischen den Schienen (11) geführt ist, und
wobei das andere der Wärmetransferfluide (6) entweder frei an den Schienen (11) oder in anderen Rohrleitungen zwischen den Schienen (11) geführt ist.

11. Wärmespeicher nach einem der vorstehenden Ansprüche,
wobei elektrische Heizelemente (20) zwischen benachbarten Schienen (11) oder in einem Kreislauf (7A) des Wärmetransferfluides (6) angeordnet sind.

12. Verfahren zum Betreiben eines Wärmespeichers,
bei dem Wärmespeicherkörper (10) zum Speichern von Wärmeenergie in einem Gehäuse (2) aufgenommen sind,
wobei mit einem Wärmetransferfluid (6) Wärmeenergie den Wärmespeicherkörpern (10) zugeführt und/oder von den Wärmespeicherkörpern (10) weggeführt wird,
**dadurch gekennzeichnet,**
**dass** jeder der Wärmespeicherkörper (10) eine metallische Schiene (11) mit länglicher Form umfasst, deren Querschnitt einen Steg (12) zwischen verbreiteten Enden (13, 14) aufweist.

## Claims

1. A heat store comprising
heat-storage bodies (10) for storing thermal energy;
a housing (2) in which the heat-storage bodies (10) are received; and
at least one conduit (7) for a heat-transfer fluid (6) in order to conduct thermal energy to and/or away from the heat-storage bodies (10); **characterized in that**
each of the heat-storage bodies (10) includes a metallic rail (11) with an elongated shape, a cross-section of which comprises a web (12) between wider ends (13, 14).

2. The heat store according to the preceding claim,
wherein in cross-section one of the wider ends (14) forms a base (16) with a flat bottom.

3. The heat store according to the immediately preceding claim,
wherein in cross-section one of the wider ends (13) forms a rail head (15) which is directly joined to the web (12) and which has a width that is greater than a width of the web (12) and smaller than a width of the base (16).

4. The heat store according to the immediately preceding claim,
wherein a mass of the rail head (15) is at least 40% of a total mass of the rail (11).

5. The heat store according to one of the preceding claims,
wherein the rails (11) are formed by railway rails.

6. The heat store according to one of the preceding claims,
wherein the rails (11) are stacked on top of one another in the housing (2) in a plurality of layers (12A-12F).

7. The heat store according to the immediately preceding claim,
wherein the rails (11) of the same layer (12B) are arranged parallel to one another and the rails (11) of an adjacent layer (12A, 12C) are arranged transversely thereto.

8. The heat store according to one of claims 3 to 7,
wherein all rails (11) stand on their respective bases (16) or
wherein adjacent rails (11) stand alternately on their base (16) or on their rail head (15).

9. The heat store according to one of claims 3 to 8,
wherein the heat-transfer fluid (6) is received in empty spaces (19) formed between the bases (16), rail heads (15) and webs (12) of respectively adjacent rails (11).

10. The heat store according to one of the preceding claims,
wherein two separately conducted heat-transfer fluids (5, 6) are provided for conducting heat to the heat-storage bodies (10) and for conducting heat away from the heat-storage bodies (10),
wherein one of the heat-transfer fluids (5) is conducted in pipe conduits (8) between the rails (11), and
wherein the other heat-transfer fluid (6) is either conducted freely along the rails (11) or in other pipe conduits between the rails (11).

11. The heat store according to one of the preceding claims,
wherein electric heating elements (20) are arranged between adjacent rails (11) or in a circuit (7A) of the heat-transfer fluid (6).

12. A method for operating a heat store,
in which heat-storage bodies (10) for storing thermal energy are received in a housing (2),
wherein thermal energy is conducted to the heat-storage bodies (10) and/or away from the heat-storage bodies (10) with a heat-transfer fluid (6), **characterized in that**
each of the heat-storage bodies (10) includes a metallic rail (11) with an elongated shape, a cross-section of which comprises a web (12) between wider ends (13, 14).

## Revendications

1. Accumulateur de chaleur, comprenant
des éléments de stockage de chaleur (10) pour stocker de l'énergie thermique; une cuve (2) dans laquelle sont logés les éléments de stockage de chaleur (10); et
au moins une conduite (7) pour un fluide de transfert de chaleur (6) afin de conduire de l'énergie thermique aux éléments de stockage de chaleur (10) et/ou afin de retirer de l'énergie thermique des éléments de stockage de chaleur (10), **caractérisé en ce que**
chacun des éléments de stockage de chaleur (10) comprend un rail métallique (11) de forme allongée dont la section transversale présente une âme (12) entre des extrémités (13, 14) plus larges.

2. Accumulateur de chaleur selon la revendication précédente,
dans lequel l'une des extrémités plus larges (14) forme, en coupe transversale, un patin (16) à fond plat.

3. Accumulateur de chaleur selon la revendication immédiatement précédente, dans lequel l'une des extrémités plus larges (13) forme, en coupe transversale, un champignon de rail (15) qui se raccorde directement à l'âme (12) et qui a une largeur supérieure à une largeur de l'âme (12) et inférieure à une largeur du patin (16).

4. Accumulateur de chaleur selon la revendication immédiatement précédente, dans lequel une masse du champignon de rail (15) représente au moins 40% d'une masse totale du rail (11).

5. Accumulateur de chaleur selon l'une des revendications précédentes, dans lequel les rails (11) sont formés par des rails de chemin de fer.

6. Accumulateur de chaleur selon l'une des revendications précédentes, dans lequel les rails (11) sont empilés les uns sur les autres en plusieurs couches (12A-12F) dans la cuve (2).

7. Accumulateur de chaleur selon la revendication immédiatement précédente, dans lequel les rails (11) d'une même couche (12B) sont disposés parallèlement les uns aux autres et les rails (11) d'une couche voisine (12A, 12C) sont disposés transversalement à ceux-ci.

8. Accumulateur de chaleur selon l'une des revendications 3 à 7,
dans lequel tous les rails (11) se dressent sur leur patin respectif (16) ou dans lequel des rails (11) voisins se dressent alternativement sur leur patin (16) ou leur champignon de rail (15).

9. Accumulateur de chaleur selon l'une des revendications 3 à 8,
dans lequel le fluide de transfert de chaleur (6) est logé dans des cavités (19) formées entre les patins (16), les champignons de rails (15) et les âmes (12) de rails (11) voisins.

10. Accumulateur de chaleur selon l'une des revendications précédentes,
dans lequel deux fluides de transfert de chaleur (5, 6) conduits séparément sont prévus pour conduire de la chaleur aux éléments de stockage de chaleur (10) et pour retirer de la chaleur des éléments de stockage de chaleur (10),
dans lequel l'un des fluides de transfert de chaleur (5) est conduit dans une tuyauterie (8) entre les rails (11), et
dans lequel l'autre des fluides de transfert de chaleur (6) est conduit soit librement sur les rails (11) soit dans une autre tuyauterie entre les rails (11).

11. Accumulateur de chaleur selon l'une des revendications précédentes, dans lequel des dispositifs de chauffage électriques (20) sont disposés entre des rails voisins (11) ou dans un circuit (7A) du fluide de transfert de chaleur (6).

12. Procédé d'exploitation d'un accumulateur de chaleur,
dans lequel des éléments de stockage de chaleur (10) destinés à accumuler de l'énergie thermique sont logés dans une cuve (2),
dans lequel l'énergie thermique est conduite aux éléments de stockage de chaleur (10) et/ou retirée des éléments de stockage de chaleur (10) avec un fluide de transfert de chaleur (6),
**caractérisé en ce que**
chacun des éléments de stockage de chaleur (10) comprend un rail métallique (11) de forme allongée dont la section transversale présente une âme (12) entre des extrémités (13, 14) plus larges.
